(19) Europäisches Patentamt
European Patent Office
Office européen des brevets

(11) **EP 1 111 409 A2**

(12) **EUROPEAN PATENT APPLICATION**

(43) Date of publication:
27.06.2001 Bulletin 2001/26

(51) Int Cl.7: **G02B 1/10**, G02B 5/28

(21) Application number: 00660232.0

(22) Date of filing: 18.12.2000

(84) Designated Contracting States:
**AT BE CH CY DE DK ES FI FR GB GR IE IT LI LU MC NL PT SE TR**
Designated Extension States:
**AL LT LV MK RO SI**

(30) Priority: 23.12.1999 FI 992776

(71) Applicant: **NOKIA MOBILE PHONES LTD.**
**02150 Espoo (FI)**

(72) Inventor: **Lehtonen, Jarmo**
**20100 Turku (FI)**

(74) Representative: **Brax, Matti Juhani**
**Berggren Oy Ab,**
**P.O. Box 16**
**00101 Helsinki (FI)**

(54) **Marking method**

(57) The invention introduces a method for coating an object with patterns formed by films, so that as a result of light reflections and interference taking place at the boundary surfaces of said patterns, the patterns bordered by the films are seen against the background with a slight contrast and in coloured shades. The preferred embodiments of the invention can be applied for instance in the coating of a display and/or part thereof, or in general in the coating of any part of a mobile telecommunication device, in order to create a desired appearance in a suitable light. The method also is suited for providing an object with a marking in a case where it is desired to protect said object against attempts at piratism.

Figure 4

**Description**

In particular, the invention relates to changing the visual appearance of optical surfaces and/or other structures.

The image of a product includes a given appearance, and special features in said appearance can be used for emphasising the characteristics of the product, for instance the impression of high technology. By providing the product with a carefully designed appearance and by using special effects that are sufficiently restrained and realised in good taste, so that buying customers associate said effects with high-class products, advantage is gained with respect to competing manufacturers.

From the production of optical components, there are known coating methods and interference-based techniques, whereby the effective reflectance factor of a lens or a corresponding object, meant for optically refracting light, is changed to be more advantageous for the application by coating the surface of said object by a coating material. Said procedure can be carried out even several times and in several layers in order to achieve an effect that is as comprehensive as possible. Thus for instance accidental disturbing reflections can be reduced by means of optical coatings.

Coating the reflective surfaces of telescope mirrors with silver, as well as other optical coating operations, such as aluminising by vaporising in a vacuum, are known techniques for achieving an advantageous optical coating.

By using techniques connected to surface microanalyses, it is possible to manipulate the microscopic surface structure and composition for example with sputtering operations, which as such are techniques known in analytics. Likewise, it is known for instance to coat samples with a metal or a carbon film in order to improve conductivity, for example for an analysis to be carried out by an electron microscope.

CVD and PVD processes (Chemical Vapour Deposition and Physical Vapour Deposition), as well as their derivatives for each application, are methods known as such in the growing of film-like surfaces, for instance in connection with the production of semiconductors or their microstructures.

The object of the invention is to achieve for the product an artistic and pleasant appearance with a certain visual effect that is observed in a certain light. The objects of the invention are achieved by treating the optical surface of the product or part of said surface by a coating method in order to create graphic images.

The invention is characterised in that an object according to the preferred embodiments of the invention comprises, on a given first spot of the object surface, a film-like optical coating that is arranged to create a given first interference effect at a given wavelength of visible light. In addition, said object comprises a given second spot of the object surface, which is arranged to create a given second interference effect at said wavelength of visible light, said second interference effect being different from said first effect.

The invention also is characterised in that the method according to the preferred embodiments thereof essentially comprises steps and/or functions in order to create on the object surface a film-like optical coating that creates light interference phenomena. On a given first spot of the object surface, there is formed a film-like optical coating with a given first interference effect at a given wavelength of visible light, and on a given second spot of the object surface, there is created a given second interference effect at said wavelength of visible light, said second interference effect being different from said first interference effect.

The present invention introduces a novel and original method for coating an object with film-like patterns, so that a certain visual effect is seen owing to light reflections and interference taking place at the boundary surfaces of said patterns. With a suitable design of the coating, the effect can be made such that the user considers it pleasant and artistic. A typical feature of the effect is that in a certain light, the coating patterns bordered by films are observed as separated from the background by a slight contrast. The effect also has advertising value for high-technology products.

The invention introduces a method for marking an object in order to identify the manufacturer or to prove its authenticity.

In principle, the preferred embodiments of the invention can on a wide scale be applied in the coating of any object, in order to produce a given appearance in a given light. Particularly optical surfaces meant to be used as a display or part thereof can be coated by the method introduced in the invention. Suitable surfaces to be coated are transparent surfaces, as well as certain surfaces of other display and/or communication devices, which as such do not have a similar task for transmitting visual and/or graphic information as a display or a window. The coatings according to the invention are characterised by nearly complete transparency, which makes them suitable for display applications.

The invention is explained in more detail below, with reference to a few preferred embodiments described by way of example, and to the appended drawings, wherein

Figure 1    illustrates the passage of light in a simple thin film,

Figure 2a    is a diagram illustrating a coating method of an object with thin films,

Figure 2b    is a diagram illustrating another coating method with thin films,

Figure 3    is an illustration showing the principle of thin films on the surface of an object, and

Figure 4     is a draft illustrating the visual reflection effect on the surface of the protective window of a mobile phone.

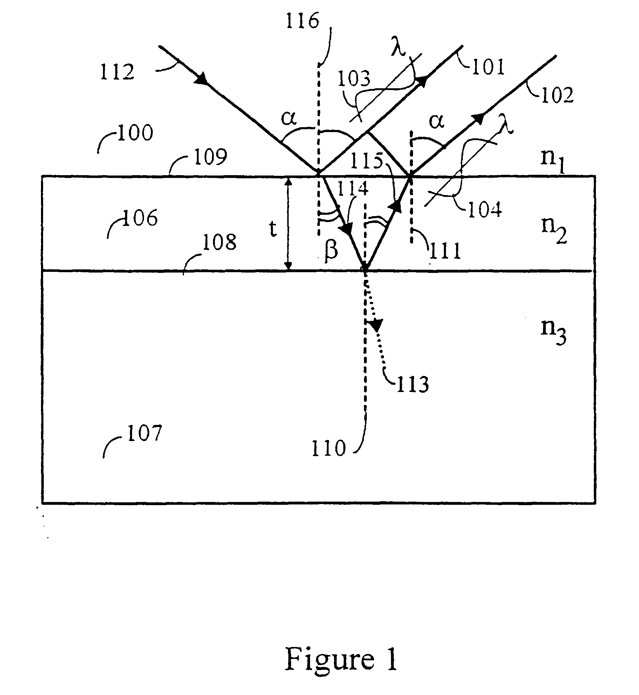

In the following description of the invention and its preferred embodiments, we shall refer to figures 1 - 4, which illustrate the invention in principle only, and thus neither the dimensions nor distances of the objects shown therein are in right proportions with each other.

In figure 1, we have observed the passage of light in a thin film from the point of view of destructive interference, as a physical introduction to the preferred embodiments of the invention. The coating 106, with a refractive index $n_2$, separates, by means of boundary surfaces 108 and 109, the medium 100 and the object 107, which in the example of figure 1 is made of glass. The refractive index of the medium 100, which in the example of figure 1 is air, is $n_1$, and that of glass is $n_3$. When a ray 112 of monochromatic light (wavelength $\lambda$) hits the first boundary surface 109, at an angle a, at a point defined by a normal 116 drawn on said boundary surface, light is reflected and refracted. Part of the refracted ray 114 is again refracted when it meets the second boundary surface 108 at a point defined by a normal 110 drawn on said boundary surface. The ray 113 is refracted and proceeds in the glass object 107. Part of the ray 114 is reflected from the surface 108 and proceeds further in the direction of the ray 115 in the coating 106. When the ray 115 meets the first boundary surface 109 at a point defined by the normal 111 drawn on said first boundary surface, the major part of the ray of light falling on said point is refracted towards the ray 102. The refracted ray 101 (phase 103) and the refracted ray 102 (phase 104) interfere, which can be seen in the proceeding direction of the rays after the reflection.

With a given coating thickness t, in between the reflected 101 and refracted 102 rays of light, there can be set a given phase difference, which results in a destructive interference, i.e. the interference effect on the light is such that the rays of light are cancelled. Essential quantities from the point of view of a given phase difference are coating thickness t, whereby the optical distance difference of the refracted ray 102 can be set to correspond for instance to half a wavelength or a multiple thereof, and the refractive index $n_2$ of the coating. When the difference in the distances travelled by the rays of light reflected and/or refracted from the boundary surfaces 108 and 109 (i.e. the difference in the routes of the rays 101 and 102, when the ray 102 proceeds along the routes 114 and 115) is a multiple of a half of a given wavelength $\lambda$, an attenuating interference takes place. From figure 1 it is easily seen that by observing the geometry of the proceeding directions of the rays of light from the point of view of wave theory, there can be obtained a clause of attenuating interference in a mathematical form, wherein the coating refractive index n, the wavelength $\lambda$ of light in the medium and the coating thickness t are interdependent in a way illustrated by the following formula (1), when m is an integral representing a multiple of the wavelength of light:

$$t = \frac{\lambda}{n} \cdot \frac{(2m+1)}{4} \qquad (1)$$

On the basis of the creation of ordinary interior lighting or daylight, light always includes several wavelengths. Typical features of the boundary surfaces of optically transparent materials are refractive indexes depending on the pair of materials forming said surface; in addition, said refractive indexes are different for different wavelengths of light. Consequently, when light meets the boundary surfaces of a sufficiently thin film, reflection, refraction and interference at different wavelengths divide white light into colour components according to the wavelength. Therefore an antireflection coating of a certain thickness only functions at a given wavelength. For instance, a typical antireflection coating $MgF_2$ in a 100 nm thick layer prevents a light proceeding at the wavelength of 550 nm (green) from being visible when reflected from a surface treated with said metal compound.

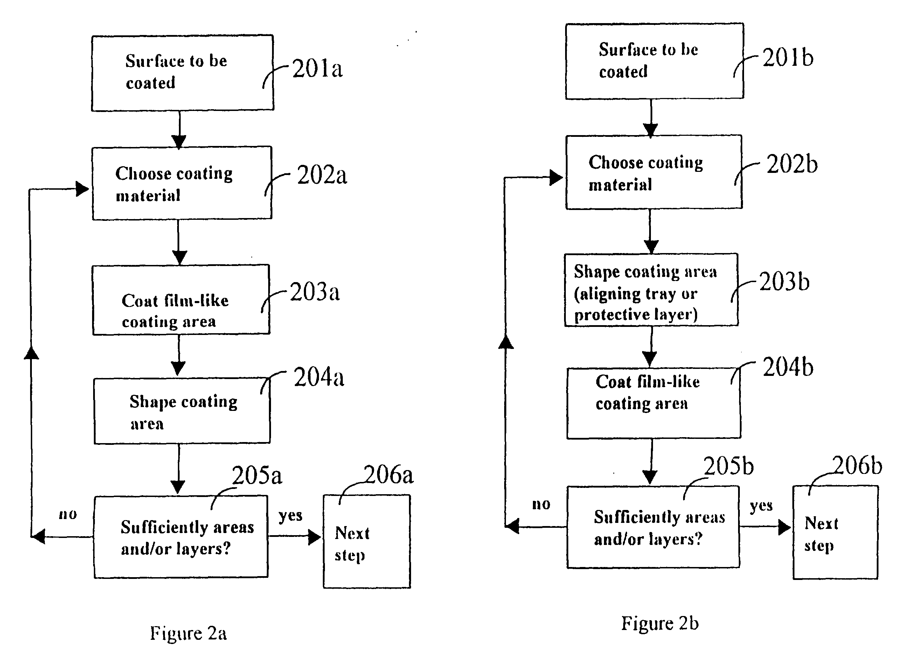

A preferred embodiment of the invention is a method whereby film-like coating patterns are produced on the surface of the object to be coated (figures 2a and 2b). As regards the methods according to said embodiment, there are at least two alternatives, which are illustrated in figures 2a and 2b. A common feature for both methods according to this embodiment is that for the surface 201a, 201b to be coated, there is chosen a coating material 202a, 202b. Thereafter, according to figure 2a, the surface of the object in question is coated, 203a, whereafter from the coating there is removed, 204a, those parts of the film that are left over the patterns. Thereafter it is checked, 205a, 205b, whether coating should be continued or not. When a sufficient number of coating layers is achieved, operations proceed to the next step 206a in treating the coated object. If the check-up 205a, 205b reveals that the coating is not yet ready, the coating operation is repeated from step 202a, 202b onwards, until a sufficient number of patterns and/or layers is achieved on the surface, in which case the next step 206a, 206b for treating the coated object can be assumed.

The method illustrated in figure 2b is essentially similar to the one illustrated in figure 2a. However, the method illustrated in figure 2b differs from the one illustrated in figure 2a as regards both the order and way of realising the design 203b of the surface patterns and the coating 204b. In the coating 204b, there can be used an aligning tray, in which case the forming 204b and shaping 203b of the film-like coating are performed on the object surface at points defined by the tray apertures. Now the shaping 203b of the coating areas has, in a certain sense, taken place prior to the coating 204b proper. However, the patterns created on the surface itself achieve their design 203a simultaneously with the coating 204b, when an aligning tray is used. An aligning tray can be a mechanical protection provided with apertures of a desired shape for creating surface patterns on the object to be coated. In this connection, also the use of other protective material layers, such as lacquers and the like, on the surface of the object to be coated is considered as an aligning tray, when certain spots on the surface to be coated are protected against the influences of the coating method essentially in way that can be compared to the use of a mechanical aligning tray.

The removal of the extra pieces of film from the coating in order to produce the patterns can be carried out by means of monochromatic and at the same time coherent electromagnetic radiation (various laser applications), by means of electrons and/or other particle radiation as well as chemically, for instance by engraving. Moreover, for a person skilled in the art it is obvious that the above mentioned ways for producing the patterns can be applied in parallel and/or in series, when a given effect should be produced in a way that is most advantageous for a certain application. There can be several different coating areas, and they can be used for realising various patterns and/or graphic signs, as well as characters from various character systems.

Among suitable methods that are preferable for creating the desired coating are the CVD and PVD processes (Chemical Vapour Deposition and Physical Vapour Deposition), as well as different sputtering methods. In order to focus the coating materials on a desired spot of the object to be coated, there can also be employed for example electric and/or magnetic fields, which interact with the coating material to be focused and/or with the surface of said object.

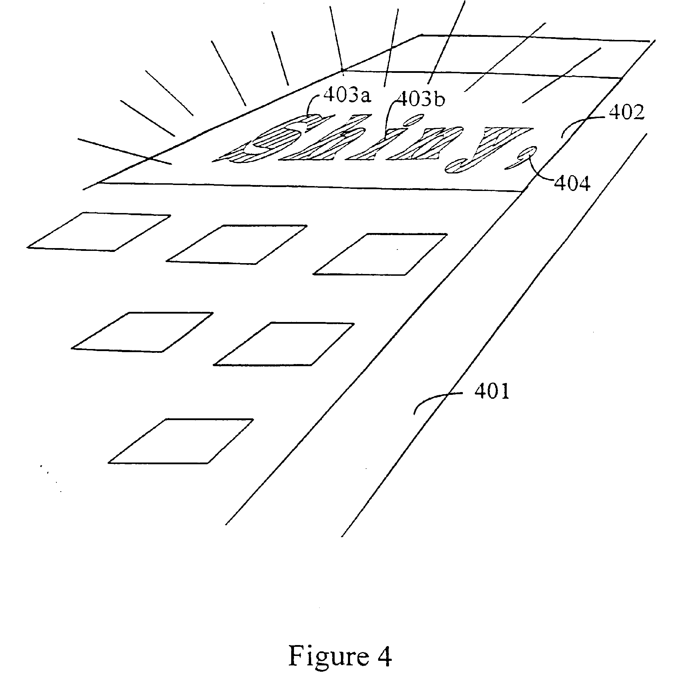

By using coatings with suitable refractive indexes (for instance coatings 302, 303, 304, 305, 306, 307), there can be created patterns, graphics and/or characters on an optical surface, i.e. coating patterns (for example 403a, 403b, 404), for instance on a display (figure 4) and/or on its protective glass sheet 402. The surface can be made of glass, plastic or a composite material. When the thickness of the coatings corresponds to certain wavelengths according to the attenuating interference clauses thereof, the coatings form different areas, where the reflected light lacks certain wavelengths. Consequently, a person who observes the light reflected from the surface of said object sees how the coated areas are distinguished from their surroundings by a slight contrast and coloured in a way determined by the wavelengths that are left; a typical feature of the way of colouring is that the complementary colours corresponding to colours of the missing wavelengths are emphasised and mixed in other colours. By means of the refractive index, the reflectance of the surface can be changed, and thus the degree in which the phenomenon stands out from the background can be adjusted.

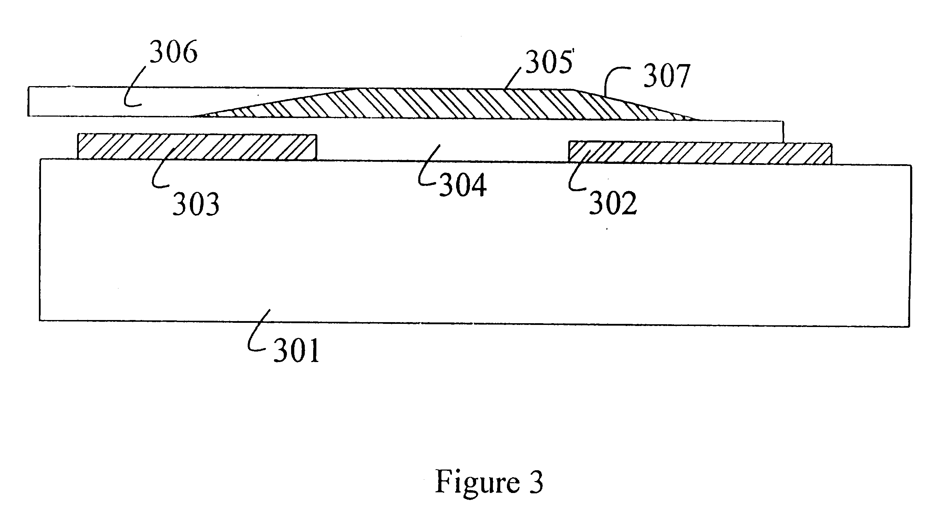

By employing several coatings 302, 303, 304, 305, 306 in layers (figure 3) with a different refractive index, a damping interference can also be achieved for most wavelengths. For instance the minimum thicknesses for the coatings (formula 1, m = 0) in the case of different wavelengths of visible light (wavelength 400 - 700 nm) are of the order 70 - 130 nm, when $MgF_2$ is used as the coating material. Other metal compounds that are suitable with respect to the optical wavelength range can also be used, in which case the film thicknesses vary depending on the desired effect and the refractive index. Among the compounds containing non-metallic materials, particularly wear-resistant materials, such as $SiO_2$, for example, are suited for coating.

The layer thickness of the coating materials can also be chosen in a different way, in which case also an interference that intensifies the interference effect can be created. In this case it is required that the distance travelled by the ray of light in the coating layer is an integral multiple of the wavelength (clause of intensifying interference). Moreover, for a person skilled in the art it is obvious that the clause of attenuating interference prevailing for a given coating layer at a given wavelength can simultaneously be the clause of intensifying interference at another wavelength. This is an important fact with coating layer thicknesses that are larger than the minimum material requirements for coatings, in which case said fact can be utilised in adjusting the colour nuances connected to the created effect. Now it is possible to use even remarkably larger layer thicknesses than the coating layer thicknesses that fulfil the attenuating interference clause of visible light. In that case the coating layer thicknesses that are feasible from the point of view of the method are within the range of 0.003 µm - 300 µm, preferably in range 0.03 - 30 µm.

Moreover, there can be made coating layers where in the first layer, for a first wavelength there prevails the clause of attenuating interference, and in a second layer, for the first wavelength there prevails the clause of intensifying interference. Respectively, there can be made coating layers where in the second layer for a second wavelength there prevails the clause of attenuating interference, and in the first layer for the second wavelength there prevails the clause of intensifying interference. Thus the interference effect can be different in the different coating layers of one and the same object, including as an extreme example of the interference effect a case where the interference phenomenon is not observed at all, for instance when rays of light are reflected from a completely uncoated surface.

By gradually changing 307 the material thickness of the coating layer, additional features can be brought in the effect. In addition, the borders between the coatings can be stepped, for instance between the coatings 302 and 304, or sliding, such as between the coatings 305 and 306. Moreover, holograms can also be applied in the effect. In that case the thicknesses and materials of the surface layers must be chosen so that as a total effect of the patterns, there is created the three-dimensional space effect typical of holograms.

In figure 4 there is shown, by way of example, a simple draft of a reflection-based pattern design according to the invention, seen on the protective window 402 of the display of a mobile phone 401. In this example, the pattern design is composed of letters 403a, 403b and 404 from the western alphabet, but the patterns can also be characters of any other alphabet or system, graphic symbols, images or figures.

In the specification above, we have described preferred embodiments of the invention with reference to mobile phones and/or displays and coatings of parts thereof. Because their manufacturing essentially differs from the manufacturing of for instance car parts and bodies, postage stamps and clothes, the application of even the preferred embodiments of the invention in these is commercially questionable, to say the least, when compared with the use of other coatings.

According to a preferred embodiment, a symbol desired by the manufacturer can be marked in a product, on a restricted surface thereof, in order to prove the name and/or authenticity of said product and/or to distinguish a pirate copy from an original product. In a preferred embodiment of the invention, this symbol includes a part belonging to the trade mark identifier desired by the manufacturer, which part may comprise a logo, a graphic symbol, bookmark and/or a combination of these. Because a trade mark identifier or another identifier that has the same position, further on just 'identifier' for short, most advantageously covers just a small portion of the rest of the area to be coated in said product, this embodiment of the invention can be applied in marking nearly any product in order to prove its origins. In a preferred embodiment of the invention, there is included a step for marking the identifier in the appropriate place, which may be located in the product package, shell, in a given location in the product itself, in a location of another product to be used in connection with the first product, in a guide instructing the use of said product or in a corresponding literary source, in a certificate of guarantee and/or in a separate certificate of authenticity.

In a preferred embodiment of the invention, there is included a step for marking an open identifier in a first identifier location, and a protected graphic identifier in another identifier location. Thus the open identifier is marked to be visible for the naked eye and can be openly verified without special tools. The protected identifier is marked so that it is visible by certain tools, but cannot be directly seen by the naked eye. In a preferred embodiment of the invention, the protected identifier is marked in a sufficiently small size. In another preferred embodiment of the invention, the protected identifier can be detected at another wavelength range of photon radiation than visible light. In a preferred embodiment of the invention, a protected identifier, an open identifier and/or the surroundings of said identifier are self-luminous. In that case the self-luminosity can be achieved by making use of the phosphorescence/fluorescence phenomenon with materials that have said feature as part of their film-like structure.

## Claims

1. A method for forming a film-like optical coating creating an interference phenomenon on the surface of an object, **characterised** in that

   - on a given first spot on the object surface, there is formed a film-like optical coating, which creates a given first interference effect at a given wavelength of visible light,
   - on a given second spot of said surface, there is created a given second interference effect at said wavelength of visible light, said second interference effect being different from said first interference effect.

2. A method according to claim 1, **characterised in** that on a second spot of said object, there is formed an uncoated area, the interference effect whereof is the reflecting of visible light from said uncoated surface.

3. A method according to claim 1, **characterised in** that on a second spot of said object, there is formed a film-like optical coating with a given second interference effect at a given wavelength of visible light.

4. A method according to claim 1, **characterised in** that in order to make the coatings, on the surface of the object to be coated there is essentially employed a CVD (Chemical Vapour Deposition ) process.

5. A method according to claim 1, **characterised in** that in order to produce the coatings, on the surface of the object to be coated, there is essentially employed a PVD (Physical Vapour Deposition) process.

6. A method according to claim 1, **characterised in** that in order to produce the coatings, on the surface of the object to be coated, there is employed sputtering.

7. A method according to claim 1, **characterised in** that the coating is tinted by means of a colouring agent in order to achieve a given nuance on the surface of the object to be coated.

8. A method according to claim 1, **characterised in** that in order to focus the coating on the surface of the object to be coated there are created areas with different electrical charges.

9. A method according to claim 1, **characterised in** that in order to focus the coating on the surface of the object to be coated there are created areas with different magnetic properties.

**10.** A method according to claim 1, **characterised in** that in order to produce a given coating pattern on the surface of the object to be coated, some of the coating is removed by using an ion beam.

**11.** A method according to claim 1, **characterised in** that it includes a step for marking the object with an identifier.

**12.** A method according to claim 11, **characterised in** that said identifier is a trade mark identifier.

**13.** A method according to claim 11, **characterised in** that said identifier includes a symbol of a lawful manufacturer of the object.

**14.** A method according to claim 11, **characterised in** that it includes steps for marking the identifier as both visible and invisible for the naked eye.

**15.** A method according to claim 14, **characterised in** that in the step for marking the identifier as invisible for the naked eye, said identifier is realised as a sufficiently small identifier.

**16.** A method according to claim 14, **characterised in** that in the step for marking the identifier as invisible for the naked eye, said identifier is realised so that it can be detected on the basis of a given photon radiation.

**17.** An object coated with a film-like optical coating, **characterised** in that it comprises

- on a given first spot on the object surface a film-like optical coating, which is arranged to create a given first interference effect at a given wavelength of visible light,
- on a given second spot on the object surface, which is arranged to create a given second interference effect at said wavelength of visible light, said second interference effect being different from said first interference effect.

**18.** An object according to claim 17, **characterised** in that a second spot on the object surface is uncoated, in which case its interference effect is the reflecting of visible light from the uncoated surface.

**19.** An object according to claim 17, **characterised** in that it comprises, on a second spot on the object surface, a film-like optical coating, which creates a given second interference effect at a given wavelength of visible light.

**20.** An object according to claim 17, **characterised** in that it comprises at least two coating layers on at least one spot.

**21.** An object according to claim 17, **characterised** in that it is a display or part thereof.

**22.** An object according to claim 17, **characterised** in that it is a mobile telecommunication device or part thereof.

**23.** An object according to claim 17, **characterised** in that the coatings are metal compounds, such as $MgF_2$.

**24.** An object according to claim 17, **characterised** in that the coatings are non-metallic compounds, such as $SiO_2$.

**25.** An object according to claim 17, characterised in that it comprises coating layers in order to create a hologram.

**26.** An object according to claim 17, characterised in that it comprises coating areas in order to create alphabetic characters.

**27.** An object according to claim 17, characterised in that it comprises coating areas in order to create graphic symbols.

**28.** An object according to claim 27, characterised in that in a coating area thereof, the graphic symbols form the symbol of the object's manufacturer.

**29.** An object according to claim 27, characterised in that in a coating area thereof, certain graphic symbols form a part of the trade mark symbol of the object's manufacturer.

**30.** An object according to claim 17, characterised in that the coating thicknesses are within the range of 0.03 $\mu$m -30 $\mu$m.

**31.** An object according to claim 17, **characterised** in that it is a product package.

**32.** An object according to claim 17, characterised in that it is a protective shell of a product.

**33.** An object according to claim 17, **characterised** in that it is part of a product.

**34.** An object according to claim 17, characterised in that it is part of another product designed to be used in connection with the first product.

**35.** An object according to claim 17, characterised in that it is a guide for instructing how to use the product.

**36.** An object according to claim 17, characterised in that it is a certificate of guarantee of the product.

**37.** An object according to claim 17, characterised in that it is a separate certificate indicating the authenticity of the product.

**38.** An object according to claim 17, characterised in that the identifier is self-luminous.

**39.** An object according to claim 38, characterised in that in the film-like structure thereof, there is included material that causes phosphorescence in order to achieve self-luminosity.

**40.** An object according to claim 38, **characterised** in that in the film-like structure thereof, there is included material that causes fluorescence in order to achieve self-luminosity.

Figure 1

Figure 2a

Figure 2b

EP 1 111 409 A2

306
305
307

303
304
302

301

Figure 3

Figure 4